(19) Europäisches Patentamt
European Patent Office
Office européen des brevets

(11) **EP 1 054 354 B1**

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(51) Int Cl.⁷: **G06T 15/10**

(21) Anmeldenummer: **99110003.3**

(22) Anmeldetag: **21.05.1999**

(54) **Verfahren zum Gewinnen einer dreidimensionalen Kartendarstellung und Navigationssystem**

Method for displaying three-dimensional maps and navigation system

Procédé d'affichage de carte tridimensionnelle et système de navigation

(84) Benannte Vertragsstaaten:
**DE FR GB IT**

(43) Veröffentlichungstag der Anmeldung:
**22.11.2000 Patentblatt 2000/47**

(73) Patentinhaber: **SIEMENS AKTIENGESELLSCHAFT 80333 München (DE)**

(72) Erfinder: **Ritter, Dieter Dr. 93049 Regensburg (DE)**

(56) Entgegenhaltungen:
**EP-A- 0 378 271     EP-A- 0 579 451
EP-A- 0 841 537     US-A- 4 490 972
US-A- 4 667 190**

**Beschreibung**

Die Erfindung betrifft ein Verfahren zum Gewinnen einer dreidimensionalen Kartendarstellung für ein Navigationssystem aus digitalen, zweidimensionalen Straßenkartendaten sowie ein Navigationssystem mit einer dreidimensionalen Kartendarstellung.

Digitale Straßenkarten für Navigationssysteme bestehen regelmäßig aus zweidimensionalen Netzwerken aus Straßensegmenten und die Straßensegmente verbindenden Knoten. Den Knoten sind Geokoordinaten zugeordnet, die jeweils durch Längen- und Breitengrade definiert sind.

Aus der Patentanmeldung EP 0 752 687 A2 ist eine dreidimensionale Darstellung aus einer Vogelperspektive für Navigationssysteme bekannt, bei der die Transformation der digitalen Straßenkartendaten in die Vogelperspektive durch Umwandlungstabellen optimiert wird. Die Darstellung der Straßenkarte erfolgt durch eine perspektivische Projektion, die von einem virtuellen, erhöhten Standpunkt aus erfolgt. Damit wird ein Pseudo-3D-Effekt erzeugt, der die Ebene in einen Fluchtpunkt zusammenlaufen läßt. Es werden also keine wirklichen dreidimensionalen Informationen benutzt, sondern die Ebene ist immer noch flach.

Die Patentanmeldung EP 0 841 537 A2 offenbart ein Navigationssystem, das eine räumliche Kartendarstellung ermöglicht. Hierzu sind topographische Merkmale, Straßen und Gebäude als dreidimensionale Daten gespeichert. Die Erstellung einer solchen Datenbank ist sehr aufwendig. Bei Änderungen von Straßeninformationen muß die komplette Datenbank neu erstellt werden. Herkömmliche zweidimensionale digitale Straßenkarten, für die es in regelmäßigen Abständen verhältnismäßig kostengünstige Neuauflagen gibt, können nicht einfach übernommen werden.

Es ist ein Ziel der Erfindung, ein Verfahren zum Gewinnen einer Kartendarstellung und ein Navigationssystem bereitzustellen, die eine dreidimensionale Kartendarstellung auf Grundlage zweidimensionaler, digitaler Straßenkartendaten ermöglichen.

Dieses Ziel wird mit einem Verfahren und einem Navigationssystem erreicht, wie sie in den unabhängigen Patentansprüchen definiert sind. Vorteilhafte Ausführungsformen sind in den Unteransprüchen angegeben.

Die Straßensegmente der zweidimensionalen Straßenkarten-Datenbank werden mit dreidimensionalen, topologischen Daten einer Geo-Topologie-Datenbank verknüpft und somit in die dreidimensionale Struktur der topologischen Daten eingebettet. Es ergibt sich somit eine echte dreidimensionale Ansicht, die Höhenunterschiede in einem Gelände wiedergibt. In gleicher Weise kann mit allen anderen in der zweidimensionalen Straßenkarten-Datenbank vorhandenen Objekten, beispielsweise Gewässer, Wald und dergleichen verfahren werden.

Eine künstliche Erhöhung von Objekten, d. h. die Multiplikation der z-Koordinate (Höhe) mit einem Faktor >1, kann den 3D-Eindruck verstärken. Dadurch treten beispielsweise Hügel und Täler stärker im visuellen Empfinden hervor.

Die Straßenkartendaten der zweidimensionalen Straßenkarten-Datenbank weisen ein Netzwerk aus Straßensegmenten mit Knoten oder Schnittpunkten auf. Die Knoten oder Schnittpunkte definieren die Straßensegmente. Jeder Knoten ist als Geodatum oder Geokoordinate typischerweise in Längen- und Breitengrade oder in kartesischen Koordinaten gespeichert. Für die Knoten eines Straßensegments, das auf der Anzeigevorrichtung wiederzugeben ist, können jeweils die dreidimensionalen topologischen Daten aus der Geo-Topologie-Datenbank ermittelt werden.

Ist in der Geo-Topologie-Datenbank kein zugehöriger Punkt für einen Knoten gespeichert, so können die dreidimensionalen topologischen Daten durch Interpolation ermittelt werden. Hierzu werden diejenigen dreidimensionalen topologischen Daten herangezogen, die der Geokoordinate des betreffenden Knoten am nächsten kommen.

Obgleich die Straßenkarten-Datenbank und die Geo-Topologie-Datenbank auf einem einzigen Datenträger untergebracht sein können, sind separate Datenträger für die Datenbanken bevorzugt. Insbesondere können die Datenbanken auf unterschiedlichen CD-ROMs gespeichert sein, die von einem CD-Wechsler bei Bedarf gelesen werden.

Optional kann zusätzlich eine Datenbank für Texturen zur Beschreibung der Oberflächen der darzustellenden Topographien und von diskreten, dreidimensionalen Objekten vorgesehen sein. Auf diese Weise können beispielsweise Wald- und Wiesenabschnitte einer Landschaft oder Gebäude in geeigneter Oberflächenstruktur und Farbe realistisch generiert werden.

Vorzugsweise werden Straßensegmente mit Begrenzungslinien versehen, so dass ein Straßensegment zunächst eine zweidimensionale Erscheinungsform erhält. Anschließend werden die Begrenzungslinien im Bereich aufeinandertreffender Straßensegmente zu einem gekrümmten Verlauf verzerrt. Dadurch entsteht vor allem bei einer starken Vergrößerung eines Kartenausschnitts eine besonders natürliche Ansicht ohne Kanten im Straßenverlauf oder an Kreuzungen.

In einer bevorzugten Ausführungsform wird zwischen einer dreidimensionalen Darstellung gewechselt, die auf der Geo-Topologie-Datenbank beruht, und einer dreidimensionalen Darstellung, die lediglich auf den zweidimensionalen Straßenkartendaten beruht. Für letztere Darstellung werden jeweils nur Straßenkartendaten für ein darzustellendes Blickfeld mit einer vorbestimmten Sichtweite für eine Ausgabe aufbereitet. Das darzustellende Blickfeld wird dabei vorzugsweise radialsymmetrisch um einen virtuellen Standpunkt durch eine polynomiale Transformation gekrümmt. Dadurch entsteht ein künstlicher Horizont. Die darzustellende Ebene ist schüsselartig verzerrt.

Vorzugsweise erfolgt eine Umschaltung in die lediglich auf den Straßenkartendaten beruhende Darstellung in Städten oder bei Kartendarstellungen in sehr großer Vergrößerung, in der die Leitinformation für einen eingegrenzten Bereich, beispielsweise einer Straßenkreuzung oder einem komplizierten Aufeinandertreffen von Straßen, im Vordergrund steht. Im innerstädtischen Bereich sind die topographischen Daten häufig ohnehin von geringerem Wert.

Weitere Merkmale, Vorteile und Anwendungsmöglichkeiten der Erfindung ergeben sich aus der nachfolgenden Beschreibung von Ausführungsbeispielen in Verbindung mit den Zeichnungen. Es zeigen:

| | |
|---|---|
| Figur 1 | ein Navigationssystem, |
| Figur 2 | einen Ausschnitt aus einer Straßenkarten-Datenbank mit einem Netzwerk aus Straßensegmenten, |
| Figur 3 | eine Darstellung der dreidimensionalen topologischen Daten zu der Fläche von Figur 2, |
| Figur 4 | eine dreidimensionale Darstellung, die durch Fusion der Daten von Figur 2 und Figur 3 gewonnen wurde, |
| Figur 5 | linienförmige Straßensegmente einer zweidimensionalen Straßenkarten-Datenbank, |
| Figur 6 | die Straßensegmente von Figur 5 nach ihrer Umwandlung in Straßen mit Begrenzungslinien und Glättung der Straßenkonturen, |
| Figur 7 | den Vorgang des Glättens der Straßenkonturen, |
| Figur 8 | ein Objekt vor dem Ausstatten mit einer Textur, |
| Figur 9 | das Objekt von Figur 8 mit Textur, |
| Figur 10 | das in eine Straßenkarte eingebundene Objekt von Figur 9, |
| Figur 11 | einen virtuellen Standpunkt als Ausgangspunkt für die Gewinnung einer dreidimensionalen Kartendarstellung mit begrenztem Horizont, und |
| Figur 12 | ein sich für den Standpunkt von Figur 11 ergebendes Blickfeld. |

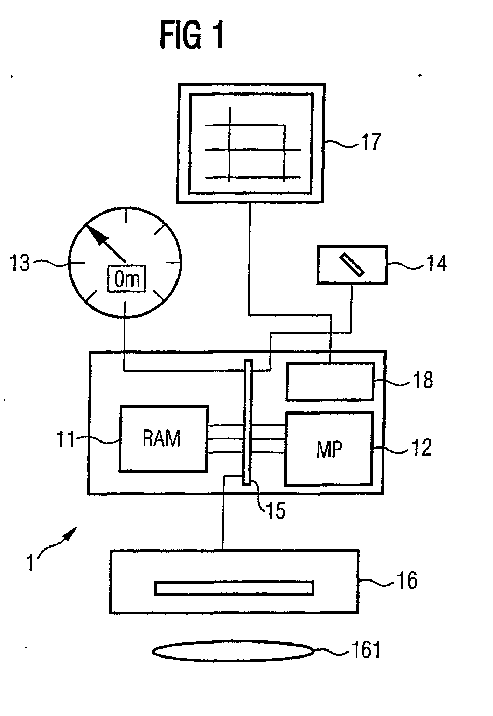

Figur 1 veranschaulicht ein Navigationssystem 1 mit einem Arbeitsspeicher 11 und einer als Mikroprozessor ausgebildeten Umwandlungseinheit 12. Ein Entfernungsmesser 13 und ein Richtungsmesser 14 dienen zur Positionsbestimmung über Koppelnavigation. Ein nicht dargestellter GPS-Sensor ist genauso wie der Entfernungsmesser 13, der Richtungsmesser 14 und ein Laufwerk 16 für ein Speichermedium 161 über einen Systembus 15 mit dem Mikroprozessor verbunden.

Beim Speichermedium 161 handelt es sich um eine DVD (digital versatile disk). Das Laufwerk kann gleichzeitig mehrere DVDs aufnehmen. Eine DVD enthält eine Straßenkarten-Datenbank, eine weitere, nicht dargestellte DVD enthält eine Topologie-Datenbank und eine weitere DVD enthält eine Textur-Datenbank mit Oberflächenbeschaffenheiten für die darzustellenden Topographien und von diskreten, dreidimensionalen Objekten.

Eine Anzeigeeinrichtung 17 wird über eine Bildsteuereinheit 18 zur Ausgabe von Bildinformation und insbesondere zur Darstellung von Straßenkarten gesteuert. Die Bildsteuereinheit 18 steht wiederum über den Systembus 15 mit dem Mikroprozessor in Verbindung.

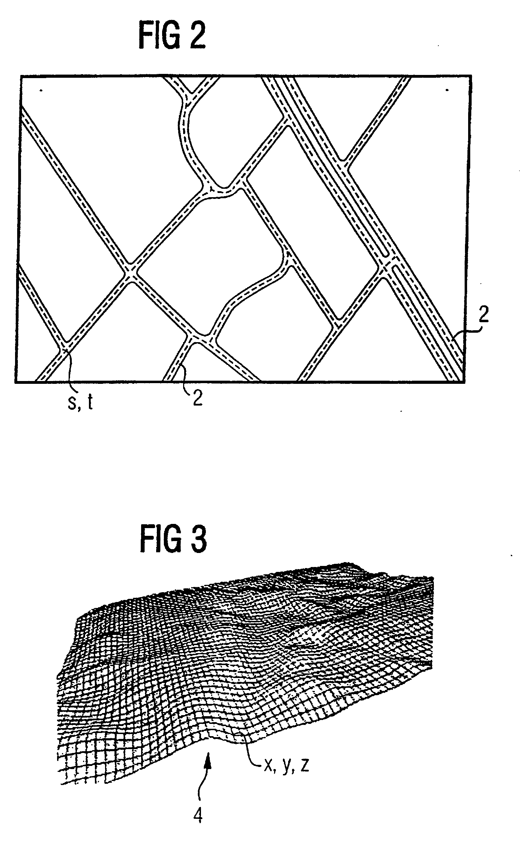

Figur 2 veranschaulicht zweidimensionale Straßenkartendaten einer Straßenkarten-Datenbank, die für einen Benutzer des Navigationssystems anzuzeigen sind. Die Straßenkarten bestehen aus Straßensegmenten 2, die flächenhaft als Straßen dargestellt sind.

Die Straßensegmente 2 sind durch zweidimensionale Geo-Koordinaten in Form von Knoten oder Schnittpunkten, an denen sich Straßen schneiden, und Gestaltungspunkte definiert, die einen Kurvenverlauf repräsentieren. Die Straßensegmente sind die Verbindungslinien zwischen den Knoten und/oder den Gestaltungspunkten (shape points).

Die Positionen der Knoten und der Gestaltungspunkte sind als zweidimensionale Straßenkartendaten s, t gespeichert.

Figur 3 zeigt netzförmig dargestellte Topologiedaten 4, wie sie beispielsweise von luft- oder satellitengestützter Erdvermessung bereitgestellt werden. Die Gitterpunkte des Netzes sind als dreidimensionale Koordinaten x, y, z gespeichert. Die Topologiedaten geben die dreidimensionale Beschaffenheit des betreffenden Geländes wieder. In diesen Daten kommen also Höhenzüge, Täler und sonstige Geländekonturen zum Ausdruck.

Die Geländekonturen werden besonders intensiv dargestellt, wenn Objekte wie Hügel und Täler künstlich erhöht werden. Dies läßt sich jeweils durch eine Multiplikation der entsprechende Koordninate, die für die Höhendarstellung verantworlich ist (z-Koordinate), mit einem Faktor >1 bewerkstelligen. Ein guter räumlicher und noch natürlicher Eindruck ergibt sich für einen Faktor zwischen 1,2 und 1,8.

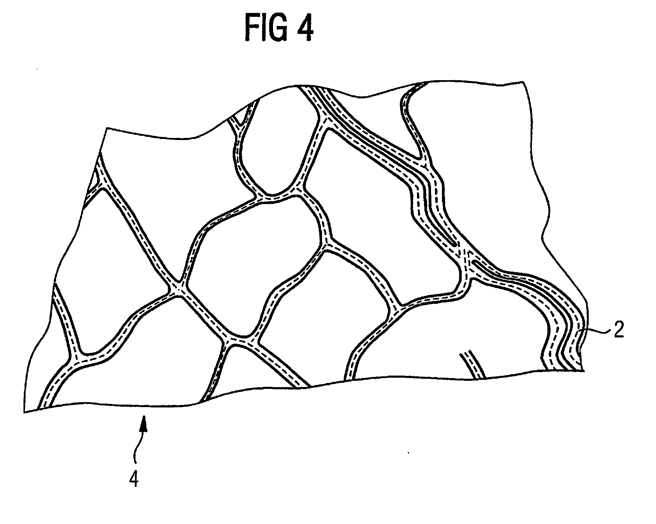

Figur 4 zeigt das Ergebnis der Verknüpfung oder Fusion der zweidimensionalen Straßenkartendaten von Figur 2 mit den dreidimensionalen topologischen Daten von Figur 3.

Zur Herstellung der gezeigten dreidimensionalen Kartendarstellung wird zu jedem Punkt s, t der zweidimensionalen Straßenkarten-Datenbank der zugehörige Punkt x, y, z aus der Geo-Topologie-Datenbank bestimmt. Existiert kein exaktes Gegenstück des Punktes s, t aus der zweidimensionalen Straßenkarten-Datenbank, so wird das zugehörige, dreidimensionale topologische Datum durch Interpolation benachbarter Punkte der Geo-Topologie-Datenbank gewonnen.

Das Resultat der Datenfusion ist eine räumliche Darstellung, die im Gegensatz zu pseudo-dreidimensionalen Darstellungsmethoden die reale Topologie der betreffenden Umgebung ergibt. Es werden also nicht nur einzelne Objekte wie markante Bergzüge oder Gebäude dreidimensional dargestellt, sondern das gesamte Blickfeld, das einem Benutzer des Navigationssystem angeboten wird.

Ein Algorithmus zur Generierung einer dreidimensionalen Anzeige weist zwei Module auf.

Im ersten Modul werden die zweidimensionalen Straßenkartendaten, die für eine optische Darstellung benötigt werden, in einen dreidimensionalen Datensatz umgewandelt.

Hierzu wird zunächst eine Schleife über alle Straßensegmente gebildet. Innerhalb dieser Schleife werden Straßenbegrenzungslinien als Polygonränder erzeugt. Diese Straßenbegrenzungslinien werden einer Spline-Interpolation unterworfen, um Ecken und Kanten im Straßenverlauf, die beispielsweise an Kurven auftreten, zu beseitigen.

Anschließend wird eine Schleife über alle Knoten der zweidimensionalen Straßenkartendaten gebildet. Innerhalb dieser Schleife werden alle zu einem Knoten gehörenden Segmente gesucht und sortiert. Die Schnittpunkte der Straßenbegrenzungslinien werden paarweise berechnet.

In einer weiteren Schleife über alle Knoten wird der Bereich der Schnittpunkte zwischen den Straßenbegrenzungslinien einer Bézier-Interpolation unterworfen. Hierdurch werden Ecken bei aufeinandertreffenden Straßensegmenten beseitigt.

Für alle so berechneten Straßenflächen (Polygonflächen) wird eine weitere Schleife gebildet. Innerhalb dieser Schleife werden die dreidimensionalen Koordinaten aller Punkte der Straßenbegrenzungslinien (Polygonbegrenzungslinien) aus den korrespondierenden topologischen Daten gewonnen, wobei z = f(x, y). Danach werden noch innerhalb derselben Schleife die perspektivisch transformierten dreidimensionalen Polygonflächen berechnet.

Im zweiten Modul des Algorithmus wird die reine Geo-Oberfläche, d. h. die von den topologischen Daten verkörperte Oberflächenstruktur, für das darzustellende Bild berechnet.

Hierzu wird eine Schleife über alle dreidimensionalen Oberflächendreiecke der benötigten Topologie-Daten gebildet. Innerhalb dieser Schleife werden die perspektivisch transformierten dreidimensionalen Dreiecksflächen berechnet. Diese Dreiecksflächen werden den darzustellenden Objekten, also der Straßen und der Geländedarstellung unterlegt.

Die von den beiden Modulen gewonnen Daten werden in einem dritten Modul weiterverarbeitet. Dort werden alle dreidimensionalen Teilflächen mit Hilfe eines z-Buffers (hidden surface) in der entsprechenden Farbe oder Textur und mit einer geeigneten Beleuchtungsquelle (Schattierung) gezeichnet, um ein komplettes Szenenbild zu generieren. Der z-Buffer regelt das Problem einander überdeckender Flächen durch eine Überprüfung der z-Koordinaten. Dadurch wird erreicht, daß in Blickrichtung eines Betrachters die vorderste Fläche nicht von einer anderen Flächen überdeckt wird, die im Bereich derselben x-, y-Koordinaten angeordnet ist. Im Gegensatz zu den dreidimensionalen topologischen Daten betrifft die z-Achse hier bei der Bildschirmausgabe nicht die Höhe eines Punktes, sondern dessen Zuordnung in der Tiefe des Raumes.

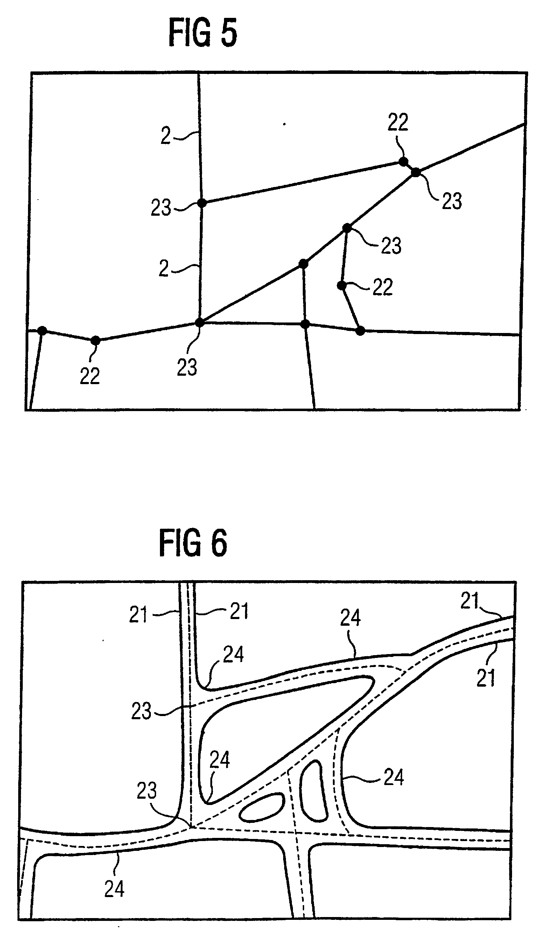

Figur 5 veranschaulicht einen Ausschnitt einer digitalen Straßenkarte, die aus zweidimensionalen Straßenkartendaten mit einem Netzwerk von Straßensegmenten 2 besteht. Mehrere aufeinandertreffende Straßensegmente weisen Knoten oder Schnittpunkte 23 auf. Kurven im Straßenverlauf sind durch Gestaltungspunkte festgelegt.

Diese zweidimensionalen Straßenkartendaten sind auf einem käuflichen Datenträger gespeichert und Grundlage für die dreidimensionale Kartendarstellung.

Figur 6 zeigt denselben Abschnitt der digitalen Straßenkarte, nachdem die Straßensegmente 2 durch die Umwandlungseinheit mit Begrenzungslinien 21 versehen wurden. Die Begrenzungslinien 21 sind im Bereich aufeinandertreffender Straßensegmente 2 oder von Schnittpunkten 23 nichtlinear interpoliert oder verzerrt. Diese Verzerrung oder Krümmung des Straßenverlaufs kann beispielsweise durch eine Bézier-Kurve oder eine Polynominterpolation erzeugt werden.

Die linien- oder strichförmigen Straßensegmente 2, die in der digitalen Straßenkarte gespeichert sind, sind als Mittellinien der Fahrbahnen wiedergegeben.

Im Gegensatz zu Figur 5 stoßen die Begrenzungslinien an den Schnittpunkten 23 und an Gestaltungspunkten 22 nicht mehr geradlinig in einem bestimmten Winkel aufeinander, sondern weisen Krümmungen oder Kurven 24 auf. Die von Straßen eingerahmten Füllflächen sind in gleicher Weise behandelt, so daß der Straßenverlauf geglättet ist und Ecken abgerundet sind.

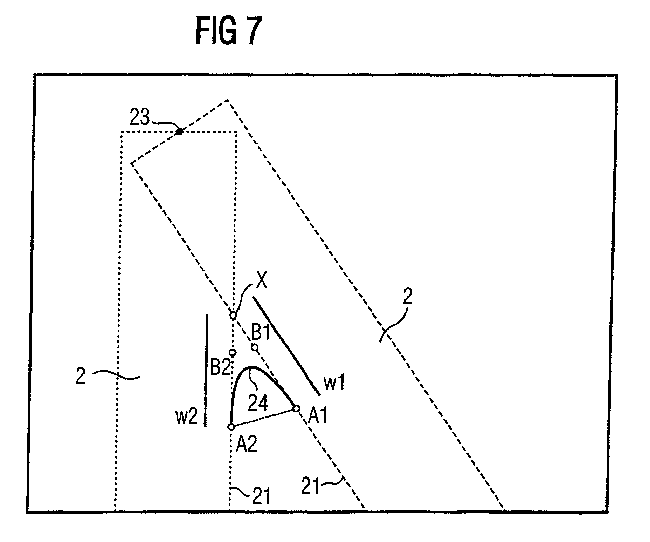

In Figur 7 wird die Glättung einer kantigen Straßenkontur mittels nichtlinearer Interpolation anhand eines anderen Ausschnitts aus der digitalen Straßenkarte veranschaulicht. Die auszugebenden Straßensegmente 2 wurden wiederum mit Begrenzungslinien 21 versehen. Dadurch erhalten aufeinandertreffende Straßensegmente 2 an den Schnittstellen X zwischen ihren Begrenzungslinien 21 eckige Konturen.

Um dies zu vermeiden erfolgt eine Glättung der Begrenzungslinien 21 mittels Bézier-Kurven in Bereichen aufeinandertreffender Straßensegmente 2. Die Darstellung der Bézier-Kurven erfolgte mit dem de-Castelj au-Algorithmus . Die Punkte $b^n(t)$ der Bézier-Kurve ergeben sich aus:

$$b_i^r(t) = (1\text{-}t)b_i^{r-1}(t) + tb_{i+1}^{r-1} \qquad (1),$$

wobei {$r = 1,..., n$; $i = 0,..., n-r$} durch die Folge von Punkten $b_i(i = 0,..., n)$ als Bézier-Punkte des Bézier-Polygons gegeben sind. Die Punkte $b_i(i = 0,..., n)$ sind die durch die Geo-Koordinaten der Straßensegmente vorgegebenen Kontrollpunkte, die den zu interpolierenden Linienzug einer Begrenzungslinie an den Schnittstellen X definieren. Ein Punkt auf der Beziér-Kurve entspricht einem Parameterwert $t \in [0 ... 1]$.

Die dargestellten Punkte A1, A2, B1 und B2 sind die durch die Geo-Koordinaten vorgegebenen Kontrollpunkte $b_i$. Genauer sind A1 und A2 die Endpunkte der dargestellten Bézierkurve. B1 und B2 sind Bézier-Konstruktionspunkte. Ferner bedeuten die vorgebbaren Parameter w1 und w2 jeweils Distanzen zur Bestimmung der Lagen der Endpunkte A1 und A2, wobei jeweils von der zugehörigen Schnittstelle X ausgegangen wird.

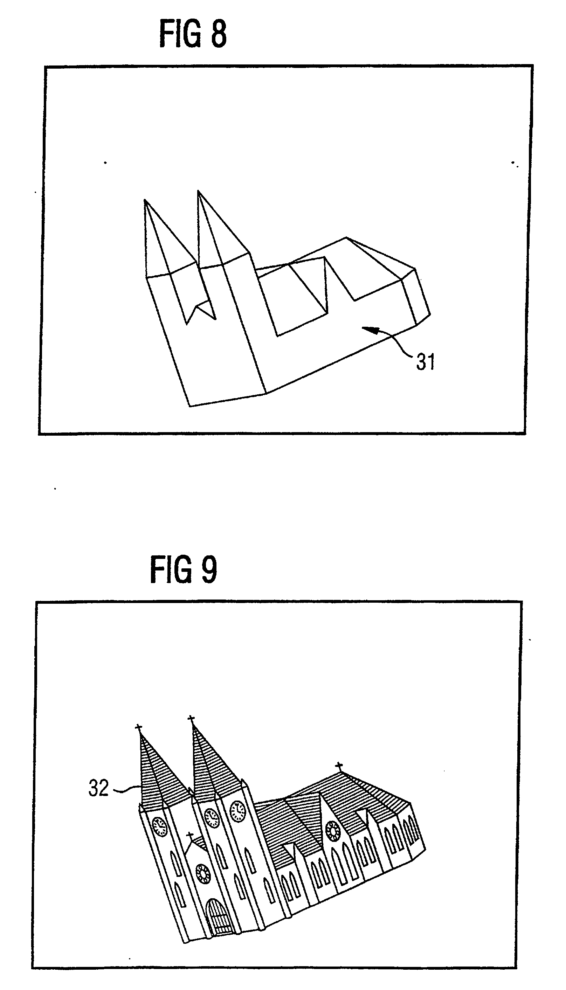

Figur 8 zeigt ein dreidimensionales geometrisches Objekt 31, bei dem es sich um eine Kirche handelt.

In Figur 9 ist das dreidimensionale Objekt 31 mit einer Textur 32 versehen, die durch Scannen einer Fotografie dieses Objekts gewonnen worden war. Die Textur enthält Detailinformationen des Objektes wie Türen, Fenster, Vorsprünge und dergleichen. Diese Detailinformationen liegen nur zweidimensional vor und werden nicht in eine dreidimensionale Struktur überführt. Durch versehen des dreidimensional aufbereiteten Objekts 31 mit der Textur ergibt sich bereits ein überzeugender dreidimensionaler Effekt.

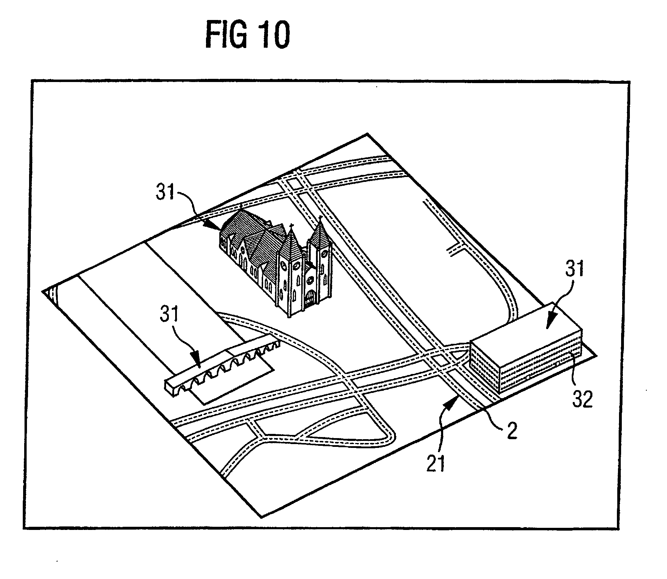

Figur 10 zeigt einen Abschnitt einer auszugebenden Straßenkarte nach der Einbindung von dreidimensionalen Objekten 31 und vor dem Transformieren der darzustellenden Ebene in eine dreidimensionale Ansicht.

Die Objekte 31 sind bereits mit den zugehörigen Texturen versehen. Die Straßensegmente 2 sind mit Begrenzungslinien 21 und mit geglätteten Kanten ausgestattet.

Figur 11 veranschaulicht eine weitere Art einer dreidimensionalen Darstellung, die lediglich auf zweidimensionalen Daten basiert und auf die Hinzunahme von dreidimensionalen topologischen Daten verzichtet. Dieser Darstellungsmodus wird insbesondere in innerstädtischen Bereichen oder bei starker Vergrößerung eines Ausschnitts einer Straßenkarte benutzt.

Die Umschaltung zwischen der dreidimensionalen Darstellung, die auf dreidimensionalen topologischen Daten beruht, und der auf zweidimensionalen Daten beruhenden Darstellung erfolgt entweder automatisch oder auf eine Benutzereinstellung hin.

Ausgehend von einem gemessenen Standort oder einer gemessenen Fahrzeugposition $S_0$ wird dem Benutzer des Navigationssystems von einem virtuellen Standpunkt S aus, der mit einer Höhe h über den Standort $S_0$ projiziert ist, eine Kartendarstellung bis zu einem künstlichen Horizont einer Höhe t geboten.

Ein Blickwinkel oder ein Blickfeld α öffnet sich von dem virtuellen Standpunkt S aus und reicht bis zu dem künstlichen Horizont. Der Abstand $r_1$ bis zum Horizont, also die Sichtweite, wird durch die Wölbung oder Krümmung der Ebene und den Beginn der Wölbung $r_0$ bestimmt. Es werden nur diejenigen Punkte aus der Ebene verzerrt, die einen Abstand r vom Standpunkt $S_0$ haben, der zwischen $r_0$ und $r_1$ liegt.

Die Höhe h des Standpunkts S und die Neigung β des Blickfelds α sind beliebig wählbar. In der Darstellung bezeichnet γ die Blickrichtung. Diese bestimmt die Ausrichtung des Blickfelds α.

Die für die Darstellung benötigten Straßenkartendaten werden durch den Horizont und der damit verbundenen, zugehörigen maximalen Sichtweite $r_1$ stark eingegrenzt.

Eine Ebene mit Straßensegmenten, deren Mittelpunkt der Standpunkt $S_0$ ist, wird radialsymmetrisch um den Standpunkt $S_0$ gekrümmt oder verzerrt. Es findet eine nichtlineare Interpolation der zweidimensionalen Ebene in die dritte Dimension statt. Zur Transformation dient eine Polynomfunktion.

Für einen beliebigen Punkt mit den kartesischen Koordinaten x, y der Ebene wird eine z-Koordinate ermittelt, mit

$$z = \Sigma_i \, a_i * r^i$$

$$r = [(x-x_p)^2 + (y-y_p)^2]^{1/2},$$

wobei die kartesischen Koordinaten $x_p$ und $y_p$ die vom Navigationssystem ermittelte Fahrzeugposition $S_0$ wiedergeben. $a_i$ sind geeignete Koeffizienten mit $i \in [1...n]$.

Eine geeignete stückweise definierte Polynomtransformation mit dem Grad p=6 zum Erzielen einer dreidimensionalen Darstellung wird im folgenden wiedergegeben:

$$r > r_0: \qquad f(r) = -a(r- r_0)^p + c\,(r- r_0)^2,$$

$$a = \frac{-2t}{(r_1 - r_0)^2(2 - p)}$$

$$c = \frac{-pt}{(r_1 - r_0)^2(2 - p)}$$

$$r \leq r_0: \qquad f(r) = 0$$

Die Farbe eines in die dritte Dimension transformierten Punktes bleibt unverändert, und die Textur, also die Darstellung der Straßen, bleibt erhalten.

Durch die polynomiale Transformation entsteht eine schüsselartig gewölbte oder gekrümmte Dar-

stellung des Blickfelds $\alpha$ mit einer definierten, einstellbaren Sichtweite $r_1$. Diese Sichtweite r entspricht einem Horizont, der sich synchron zur Änderung des Standpunkts $S_0$ bewegt.

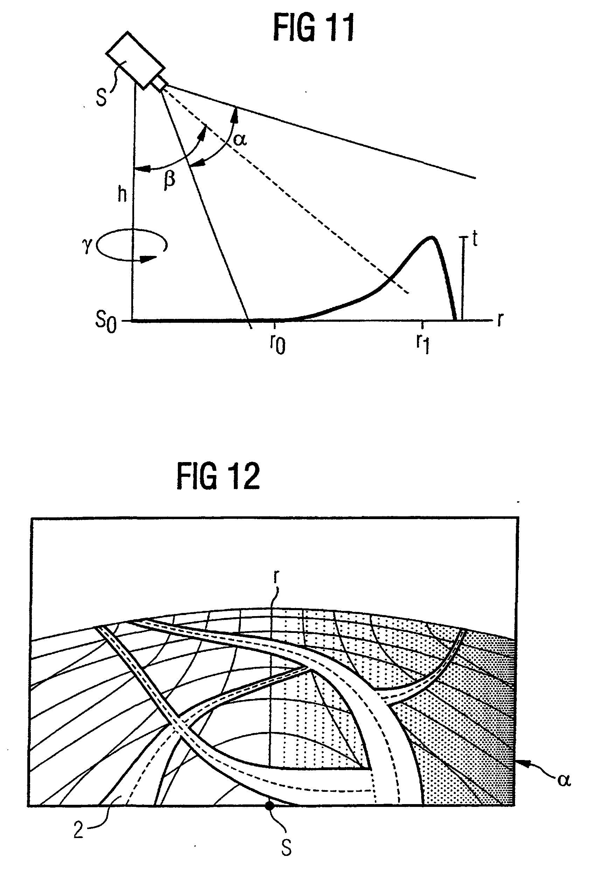

Figur 12 veranschaulicht ein Blickfeld $\alpha$. Dieses umfaßt ausgehend vom virtuellen Standpunkt S lediglich einen Teilausschnitt oder Sektor der Straßenkartendaten, die um den virtuellen Standpunkt S in einem Kreis mit dem Radius oder der Sichtweite $r_1$ liegen. Die Darstellung beschränkt sich auf ein in Fahrtrichtung liegendes Blickfeld, welches der natürlichen Betrachtungsweise eines Fahrzeugführers entspricht.

Um dem Betrachter des wiedergegebenen Blickfelds $\alpha$ genauere Informationen über Entfernungen und Maßstab zur Verfügung zu stellen, ist das Blickfeld vom virtuellen Standpunkt aus bis zur Sichtweite $r_1$ oder dem Horizont mit einem Maschengitter versehen.

Die flächenförmig dargestellten Straßensegmente 2 sowie der dreidimensionale Hintergrund können dabei durch NURBS-Flächen dargestellt werden, die mit Texturen versehen sind.

Im linken Teil des Blickfeld $\alpha$ ist die Straßenkarte deutlich heller wiedergegeben, um die Richtung der Sonneneinstrahlung tageszeitabhängig wiederzugeben. Zudem ist der Bereich der stärksten Krümmung am hellsten wiedergegeben. Durch diese krümmungsabhängige Beleuchtung wird ein besonders realistische dreidimensionale Ansicht erzeugt.

## Patentansprüche

1. Verfahren zum Gewinnen einer dreidimensionalen Kartendarstellung, die Höhenunterschiede in einem Gelände visuell wiedergibt, für ein Navigationssystem (1) aus digitalen, zweidimensionalen Straßenkartendaten einer Straßenkarten-Datenbank mit einem Netzwerk aus Straßensegmenten (2), wobei die darzustellenden Straßensegmente (2) mit die dreidimensionale Beschaffenheit eines Geländes wiedergebenden dreidimensionalen topologischen Daten (4) einer separaten Geo-Topologie-Datenbank im Navigationssystem zur Generierung einer dreidimensionalen Ansicht verknüpft werden und die generierte Ansicht anschließend auf eine Anzeigevorrichtung (17) ausgegeben wird.

2. Verfahren nach Anspruch 1, **dadurch gekennzeichnet, daß** die Straßensegmente (2) durch Knoten (23) miteinander verbunden sind, daß den Knoten (23) in der Straßenkarten-Datenbank Geokoordinaten (s, t) zugeordnet sind, daß zu den Knoten (23) eines auszugebenden Straßensegments (2) jeweils ein zugehöriger Punkt (x, y, z) der dreidimensionalen topologischen Daten (4) ermittelt wird, und daß die Straßensegmente (2) zwischen den in den topologischen Daten (4) ermittelten Punkten eingetragen werden.

3. Verfahren nach dem vorhergehenden Anspruch, **dadurch gekennzeichnet, daß** jeweils eine für die Höhendarstellung zuständige Koordinate (z-Koordinate) des Punkts (x, y, z) mit einem Faktor >1 multipliziert wird.

4. Verfahren nach einem der vorhergehenden Ansprüche, **dadurch gekennzeichnet, daß** in einer Textur-Datenbank gespeicherte Texturen (32), die mit einem Raster von Geokoordinaten (s, t) versehen sind, den dreidimensionalen topologischen Daten (4) zugeordnet werden.

5. Verfahren nach einem der vorhergehenden Ansprüche, **dadurch gekennzeichnet, daß** Objekte (31) als dreidimensionale geometrische Körper entsprechend ihren Geokoordinaten den topologischen Daten (4) zugeordnet werden.

6. Verfahren nach einem der vorhergehenden Ansprüche, **dadurch gekennzeichnet, daß** Straßensegmente (2) mit Begrenzungslinien (21) versehen werden, und daß die Begrenzungslinien (21) im Bereich aufeinandertreffender Straßensegmente (2) zu einem gekrümmten Verlauf verzerrt werden.

7. Verfahren nach einem der vorhergehenden Ansprüche, **dadurch gekennzeichnet, daß** bei einer starken Vergrößerung oder im innerstädtischen Bereich die Straßenkartendaten für ein darzustellendes Blickfeld ($\alpha$) mit einer vorbestimmten Sichtweite (r) radialsymmetrisch um einen virtuellen Standpunkt (S) durch eine polynomiale Transformation gekrümmt werden.

8. Verfahren nach dem vorhergehenden Anspruch, **dadurch gekennzeichnet, daß** der virtuelle Standpunkt (S) fortlaufend von dem Navigationssystem (1) ermittelt wird, und daß das Blickfeld ($\alpha$) synchron mit dem virtuellen Standpunkt (S) verschoben wird.

9. Navigationssystem mit einer Anzeigeeinrichtung (17), mit einer Positionsbestimmungseinheit (15), mit wenigstens einem Speichermedium (161) zur Speicherung einer Straßenkarten-Datenbank mit zweidimensionalen Straßenkartendaten aus einem Netzwerk von Straßensegmenten (2) und mit einer Umwandlungseinheit (18) zur Umwandlung von Straßensegmenten (2) der Straßenkarten-Datenbank und von die dreidimensionale Beschaffenheit eines Geländes wiedergebenden dreidimensionalen topologischen Daten (4) einer separaten Geo-Topologie-Datenbank in eine dreidimensionale Straßenkartendarstellung, die Höhenunterschiede in einem Gelände visuell wiedergibt, wobei die Straßenkartendaten mit den dreidimensionalen topologischen Daten im Navigationssystem zur Generierung einer dreidimensionalen Ansicht verknüpft werden.

## Claims

1. Method for obtaining a three-dimensional map representation, which visually reproduces height differences in a terrain, for a navigation system (1) from digital, two-dimensional road map data of a road map database having a network of road segments (2), the road segments (2) to be represented being linked with the aid of three-dimensional, topological data (4), reproducing the three-dimensional character of a terrain, of a separate geotopology database in the navigation system for the purpose of generating a three-dimensional view, and the generated view subsequently being output onto a display device (17).

2. Method according to Claim 1, **characterized in that** the road segments (2) are connected to one another by nodes (23), **in that** the nodes (23) are assigned geocoordinates (s, t) in the road map database, **in that** an associated point (x, y, z) of the three-dimensional topological data (4) is determined in each case at the nodes (23) of a road segment (2) to be output, and **in that** the road segments (2) are plotted between the points determined in the topological data (4).

3. Method according to the preceding claim, **characterized in that** a coordinate (z-coordinate) of the point (x, y, z), which is responsible for the representation of height, is multiplied in each case by a factor >1.

4. Method according to one of the preceding claims, **characterized in that** textures (32) which are stored in a texture database and are provided with a raster of geocoordinates (s, t) are assigned to the three-dimensional topological data (4).

5. Method according to one of the preceding claims, **characterized in that** objects (31) are assigned to the topological data (4) in accordance with their geocoordinates as three-dimensional geometrical bodies.

6. Method according to one of the preceding claims, **characterized in that** road segments (2) are provided with boundary lines (21), and **in that** the boundary lines (21) are distorted into a curved course in the region of juxtaposed road segments (2).

7. Method according to one of the preceding claims, **characterized in that** in the case of intensive enlargement or in the downtown area the road map data for a field of view (α) to be represented and having a predetermined visual range (r) are banked in a radially symmetric fashion around a virtual viewpoint (S) by means of a polynomial transformation.

8. Method according to the preceding claim, **characterized in that** the virtual viewpoint (S) is determined continuously by the navigation system (1), and **in that** the field of view (α) is displaced synchronously with the virtual viewpoint (S).

9. Navigation system having a display device (17), having a position-determining unit (15), having at least one storage medium (161) for storing a road map database with two-dimensional road map data from a network of road segments (2) and having a conversion unit (18) for converting road segments (2) of the road map database and three-dimensional topological data (4), reproducing the three-dimensional character of a terrain, of a separate geotopology database into a three-dimensional road map representation which visually reproduces height differences in a terrain, the road map data being linked with the three-dimensional topological data in the navigation system for the purpose of generating a three-dimensional view.

## Revendications

1. Procédé pour obtenir une représentation de carte tridimensionnelle qui reproduit visuellement les différences de hauteur sur un terrain, pour un système de navigation (1), à partir de données de cartes routières numériques, bidimensionnelles, d'une base de données de cartes routières comprenant un réseau composé de segments de routes (2), dans lequel les segments de routes (2) à représenter sont combinés avec des données topologiques tridimensionnelles (4) d'une base de données de géo-topologie séparée qui reproduisent la propriété tridimensionnelle d'un terrain, pour la génération d'une vue tridimensionnelle, et la vue ainsi générée est éditée ensuite sur un dispositif de visualisation (17).

2. Procédé selon la revendication 1, **caractérisé en ce que** les segments de routes (2) sont reliés entre eux par des noeuds (23), **en ce que** des géo-coordonnées (s, t) sont atribuées aux noeuds (23), dans la base de données de cartes routières, **en ce que**, pour chacun des noeuds (23) d'un segment de route (2) à éditer, est calculé un point correspondant (x, y, z) des données topologiques tridimensionnelles (4) et **en ce que** les segments de routes (2) sont rapportés entre les points trouvés dans les données topologiques (4).

**3.** Procédé selon une des revendications précédentes, **caractérisé en ce qu'**à chaque fois, une coordonnée (coordonnée z) du point (x, y, z) qui vaut pour la représentation de la hauteur est multiplié par un facteur > 1.

**4.** Procédé selon une des revendications précédentes, **caractérisé en ce que** des textures (32) qui sont munies d'une grille de géo-coordonnées (s, t) et qui sont mémorisées dans une base de données de texture sont associés aux données topologiques tridimensionnelles (4).

**5.** Procédé selon une des revendications précédentes, **caractérisé en ce que** des objets (31) sont associés, en qualité de corps géométriques tridimensionnels, aux données topologiques (4), d'une façon qui correspond à leurs géo-coordonnées.

**6.** Procédé selon une des revendications précédentes, **caractérisé en ce que** des segments de routes (2) sont munis de lignes de limitation (21) et les lignes de limitation (21) sont déformées, dans la région des segments de routes (2) qui se rejoignent, pour donner un tracé courbe.

**7.** Procédé selon une des revendications précédentes, **caractérisé en ce que**, dans un fort agrandissement ou dans une région intra-urbaine, les données de cartes routières pour un champ de vision (α) à représenter qui possède une portée de vision prédéterminée (r), sont incurvées autour d'un site virtuel (S) avec une symétrie radiale par une transformation polynomiale.

**8.** Procédé selon une des revendications précédentes, **caractérisé en ce que** le site virtuel (S) est généré continuellement au moyen du système de navigation (1) et le champ de vision (α) est déplacé en synchronisme avec le site virtuel (S).

**9.** Système de navigation possédant un dispositif de visualisation (17) comprenant une unité (15) de détermination de la position, au moins un milieu de mémoire (161) destiné à mémoriser une base de données de cartes routières contenant des données de cartes routières bidimensionnelles composées d'un réseau de segments de routes (2) et une unité de conversion (18) destinée à convertir des segments de routes (2) de la base de données de cartes routières et des données topologiques tridimensionnelles (4) d'une base de données de géotopologie séparée qui reproduit la propriété tridimensionnelle d'un terrain en une représentation de carte routière tridimensionnelle qui reproduit visuellement les différences de hauteur sur un terrain, les données de cartes routières comportant les données topologiques tridimensionnelles étant combinées dans le système de navigation pour générer une vue tridimensionnelle.

# FIG 1

13

0m

17

14

18

11 RAM

12 MP

15

1

16

161

# FIG 2

s, t

2

2

# FIG 3

x, y, z

4

# FIG 4

## FIG 5

## FIG 6

## FIG 7

# FIG 8

# FIG 9

# FIG 10

# FIG 11

# FIG 12